# EUROPEAN PATENT SPECIFICATION

(11) **EP 1 106 411 B1**
(45) Date of publication and mention of the grant of the patent: **16.06.2004**
(21) Application number: 00204361.0
(22) Date of filing: 06.12.2000
(51) Int. Cl.: B60K 6/04

(54) **Power unit for small self-propelled machines**
Antriebseinheit für kleine selbstfahrende Arbeitsmaschinen
Unité de propulsion pour petites machines automotrices

(30) Priority: 10.12.1999 IT RE990131
(43) Date of publication of application: 13.06.2001
(73) Proprietor: Interpump Engineering S.r.l., 42100 Reggio Emilia (IT)
(72) Inventor: Montipo, Fulvio, c/o Interpump Engineering S.r.l., 42100 Reggio Emilia (IT)
(74) Representative: Corradini, Corrado

(56) References cited:
- EP-A- 0 350 615
- EP-A- 0 855 305
- EP-A- 0 878 339
- DE-A- 4 109 379
- DE-A- 19 633 194

## Description

This invention relates to a so-called hybrid power unit, typically used on sweeping and floor washing machines used for example in industrial factories.

Due to the need to use such machines both indoors and outdoors, the sweeping and the floor washing machines of the latest generation are provided with a power unit which enables them to be used also in closed environments without creating pollution problems.

A machine of this type is described in Italian Patent Application No. PN97A000036.

It comprises an electric motor connected to a rechargeable electrical feed battery and provided to operate at least one drive wheel of the machine, an internal combustion engine provided with an electrical starter device, and control means interposed between said battery, said starter device and said operating motor.

In particular, said starter device i.s permanently linked to the i.c. engine, and consists of a permanent magnet electrical machine which can be connected to the battery to start the i.c. engine, and be rotated by the same i.c. engine to produce electrical energy.

The speed with which the i.c. engine drives said permanent magnet electrical machine is greater than that with which this latter rotates the i.c. engine on starting, said control means being arranged to sense not only when the battery charge level is at maximum, but also when it reaches a predetermined level, less than the maximum level, at which the i.c. engine is to be started.

The aforedescribed machine operates as follows.

When used indoors, the i.c. engine is excluded and the electric motor operating at least one drive wheel of the machine is powered by the battery alone.

When the machine is used outdoors, said electric operating motor is still powered by the battery, which therefore constitutes the main energy source of the machine, the i.c. engine being started only when the battery charge falls below said predetermined level.

Moreover, when the i.c. engine is rotating, the following situations can arise, namely one in which the electrical energy produced by the machine or the permanent magnet electric motor exceeds that absorbed by the motor operating the drive wheel, as can occur for example during normal machine transfer, and one in which are the electrical energy produced by the machine or permanent magnet motor is less than that absorbed by the motor operating the drive wheel, as can occur for example when the machine travels along an upward slope.

In the first case the excess energy is used to recharge the battery, and the i.c. engine is halted once this latter has attained its optimum and charge level.

In the second case, the energy deficiency is made up by the battery, which in this situation behaves as an electrical buffer source.

The aforedescribed machine has proved unsatisfactory for at least the following reasons.

Firstly, the operations involved in starting the i.c. engine, which are necessary for the aforesaid reasons, can give rise in time to problems of durability and reliability of the members concerned, in particular in consideration of the fact that the permanent magnet motor performs a double function, as stated. Moreover, seeing that the battery constitutes, as stated, the main energy source of the machine, it has necessarily to be particularly powerful, and hence also particularly heavy (and costly), its weight representing a ballast which results in inopportune power absorption under all machine operating conditions.

DE 1963319A discloses a power unit according to the preamble of claim 1, for a hybrid drive comprising an internal combustion engine/generator unit, an energy store coupled electrically to the generator and one electric drive motor electrically connected to the generator and to the energy store. The energy store is of small storage capacity (100 Wh), but of high power density, realised as a flywheel or as a supercondenser.
The scope of the drive disclosed by D1 is to reduce pollution as possible, and said scope is achieved by basing the operating characteristic for controlling the operation of the i.c. engine on the power requirement curve of the electric motor temporally smoothed in accordance of one of the customary methods, the i.c. engine being operated at or near full load.
When the demand of power by the electric motor rises suddenly, the i.c. engine does not respond to the actual power requirement curve, but to a smoothed curve, so avoiding sudden power variation for the i.c. engine and sudden changes in the throttle valve thereof, resulting in peak values of the pollutants.
In other words the energy store serves to compensate the occurring short term power differences between the instantaneous power requirements of the electric drive motor and the power which is output instantaneously by the i.c. engine, for the time necessary to adjust smoothly the i.c. engine power curve.
The possibility that the required driving energy can be extracted only from the energy store, even if the power requirement is very low, should be excluded in view of the very small storage capacity of the store.

The main object of the present invention is to obviate the aforesaid within the context of a simple, rational and reliable construction.

Said object is attained by virtue of the characterising elements indicated in the claims.

In particular, within the context of a power unit for self-propelled machines which comprises a i.c. engine with relative starter motor, a rechargeable battery electrically connected to said motor via starter control means, a current generator provided for recharging said battery under the control of said i.c. engine, at least one electric motor connected to the generator and intended to operate at least one machine member, such as a drive wheel, and operating and control means for the said elements, according to the invention said i.c. engine is permanently coupled to said generator in order, with the battery normally excluded and with the machine operating under not particularly severe conditions, to provide said at least one operating motor with the energy necessary for its operation, plus an overcurrent intended to charge said battery, if necessary, via said means.

The generator is conveniently of the self-regulating type, i.e. arranged to provide exactly the amount of energy required.

Preferably said current generator is able to provide energy equal to the maximum absorption of the machine under normal operating conditions, i.e. with all the electrical user items, both main and secondary, activated, plus said overcurrent.

Moreover, said battery, said generator and said operating and control means are combined in such a manner that the battery operates as a supplementary energy source when, under particularly severe operating conditions, the energy delivered by the generator is insufficient.

All the objects of the invention are attained by the aforestated solution.

In this respect, the starter motor and the current generator consist of usual separate devices having a specific function, hence not affected by the durability and reliability problems which affect the double-function electrical starter device mentioned in the introductory document.

Moreover, as the battery does not constitute the main energy source of the machine, but is used, other than when operating the machine in closed environments, only under particularly severe operating conditions, for example in confronting an uphill path, it can be of relatively low power, and hence of correspondingly low weight, with evident lesser power wastage whatever the operating conditions of the machine.

The i.c. engine can be of diesel or otto cycle, and can be dimensioned only for normal use, i.e. for not particularly severe conditions.

Preferably it is of constant r.p.m.

Alternatively it can be of variable r.p.m. In this case it is preferably controlled by said operating and control means in such a manner as to automatically accelerate and decelerate on the basis of requirements, with evident advantages in terms of consumption, noise and emissions.

The characteristics and constructional merits of the-invention will be more apparent from the ensuing description with reference to the figures of the accompanying drawings, which illustrate a particular preferred embodiment thereof by way of non-limiting example.

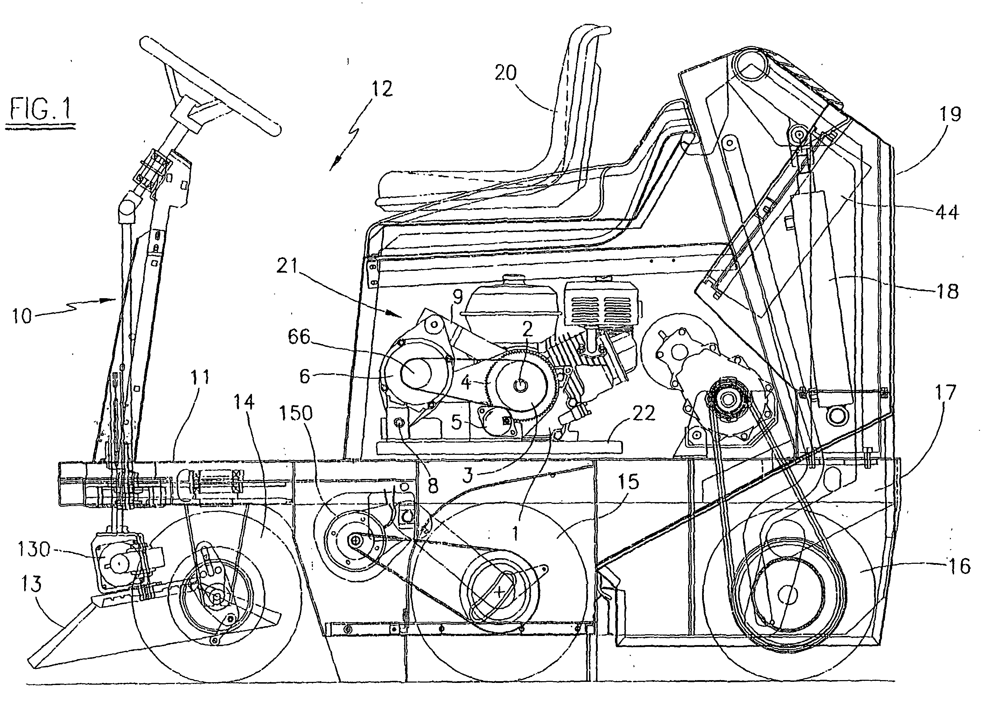

Figure 1 is a transparent side elevation showing a power unit of the invention associated with a motor sweeper.

Figure 2 is a partial view from above of the preceding figure on an enlarged scale.

Figure 3 is an electrical schematic showing the main connections of the invention, in which the mechanical connections are indicated by lines in the form of three side-by-side full segments, electrical power connections by single full lines, and electrical operating and control connections by thin dashed lines.

Firstly it should be noted that the application of the invention to a motor sweeper 10 such as that shown must not be considered in any way a limiting factor, as the invention is well suited to other applications, such as a floor washer, a lawn mower or a vehicle for disabled persons.

Briefly, the motor sweeper 10 comprises a frame 11, a driver compartment 12, two front lateral opposing conical brushes 13 each provided with an electric motor 130 and adjustable in height, a steerable wheel 14 to the rear thereof, a rear transverse horizontal cylindrical brush 15 driven by an electric motor 150, two drive wheels 16 to the rear thereof operated by an electric motor 160, and a rear dirt collection bin 17 with relative overlying filter 44 positioned inside the bin 19.

The said electric motors 130, 150 and 160 represent the user items which absorb a large part of the electrical energy in play during the use of the machine 10, other electrical service devices being provided such as a motor-driven pump unit (not visible) for operating the cylinder-piston unit 18 which opens the cowling 19, optical units, a suction unit, a filter vibrating unit, complete cabling, a dashboard, and means for operating and controlling the entire machine assembly.

Below the seat 20, which is tiltable for obvious reasons, there is the power unit 21 of the invention, positioned on a damped support plate 22.

The unit 21 comprises an i.c. engine 1 which is fixed on said plate 22, on its exit shaft 2 there being keyed a toothed pulley 3 and a ring gear 4 with external toothing.

In front of said shaft 2 there is a starter motor 5 with relative slidable pinion 55 to drive the ring gear 4, and simultaneously start the engine 1.

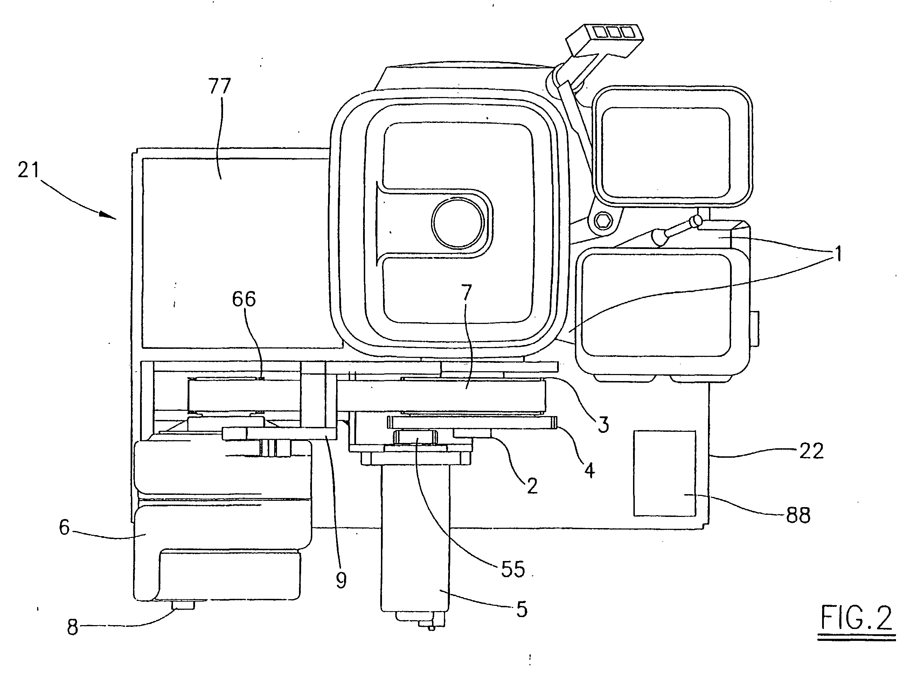

Said motor 5 is of the usual type, in the sense that once the engine 1 has been started the toothed pinion 55 returns to its retracted rest position shown in Figure 2.

To the side of said motor 5 there is positioned a current generator 6, on the rotor shaft of which there is keyed a toothed pulley 66, a toothed belt 7 passing endlessly about this pulley 66 and about the pulley 3 keyed on the shaft 2 of the engine 1.

In particular, correct tension of the belt 7 is ensured by pivoting the generator 6 to the plate 22 by a lower pin 8, and pivoting it at its top to an arm 9 with an adjustable coupling point.

There are also provided a rechargeable battery and operating and control means for the machine assembly 10, these in the illustrated example being positioned on the plate 22 and indicated by 77 and 88 respectively.

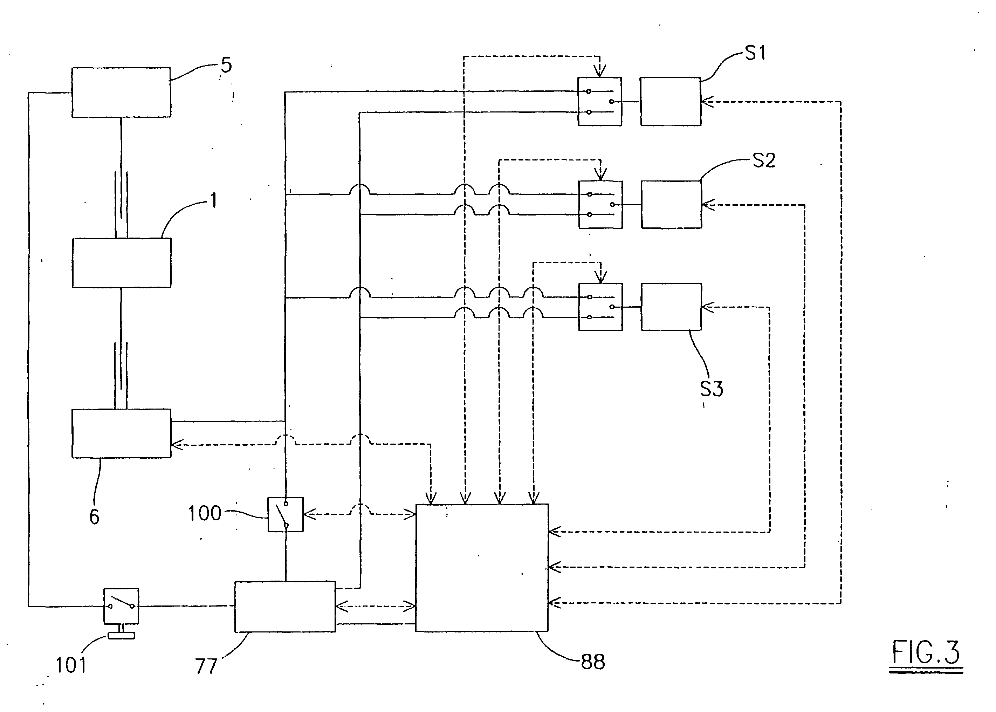

The current generator 6 is directly connected to the battery 77 by way of a usual automatic charge stopping device 100 (see Figure 3), and is also directly connected to the services (S1, S2, S3 in Figure 3) by way of switch means. It is also connected to electronic control means 88.

The battery 77 is connected to the services or user items only via the electronic operating and control means 88.

Said means 88 comprise, in particular, an electronic power system, for example a MOSFET system, an electronic control system, for example a HITACHI HS/3644 microprocessor system, an electronic display system, an electronic control system, and an electronic peripheral self-diagnosis system.

The i.c. engine 1 can be of otto cycle or diesel cycle.

In the illustrated example it is of fixed r.p.m.

Alternatively it can be of variable r.p.m., to automatically adapt by increase or decrease to the power requirements of the user items in operation at that moment.

Said alternative solution has advantages both in terms of fuel consumption, in that in the fuel quantity used corresponds exactly to the required power, and in terms of noise because of the fact that at low speed, for example during machine transfer, the engine 1 rotates practically at minimum r.p.m.

The main characteristics of the main user items of the illustrated motor sweeper 10 are given below by way of example.
* motor 5: 250 W
* i.c. engine 1: 4100 or 4900 W
* generator 6: 2200 or 2800 W
* battery 77: 24 V; 80 A, 140 A, 240 A, or 300 A
* motor 160: 750 W
* motor 150: 500 W
* motors 130: 2x90 W
* suction unit: 2x150 W
* filter vibration unit: 2x60 W
* bin opener unit: 500 W

The invention operates as follows.

When the machine is used indoors, the engine 1 is excluded by a suitable signal fed from the driver compartment 12 to the means 88, and the activated user items are energised by the battery 77.

When however the machine is used outdoors, the engine 1 is started and the generator 6 produces the current necessary for powering at least the main machine devices, plus at least an overcurrent for recharging the battery 77 if necessary.

When the battery 77 has attained its maximum charge level, the connection between the battery and generator is broken (to safeguard the battery integrity) and all the current produced is fed to the activated user items.

As initially stated, the generator 6 is preferably able to generate all the current required for operating all the user items (both main and secondary) of the machine, plus said battery charging overcurrent.

If the operating conditions become fairly severe and such as to make the generator unable to provide the necessary energy, for example when confronting a fairly steep rise, and possibly with the user items switched on, the generator 6 (whether coupled to a constant or variable r.p.m. motor) provides all the energy which it is able to produce, and the battery, as a result of the command to the electronic means 88, becomes connected to the feed circuit for the activated user items, in order to make up the energy deficiency.

When the said situation no longer exists, the battery is automatically disconnected from the user items, and the generator alone energises those user items active at that moment.

Finally, in the Figure 3 the contactor provided for starting the motor 5 is indicated by 101.

The merits and advantages of the invention are apparent from the aforegoing.

## Claims

1. A power unit for self-propelled machines, comprising an i.c. engine (1), a current generator (6)connected thereto, a rechargeable battery (77) connected to said generator, at least one electric motor (130, 150, 160) connected to the generator and intended to operate at least one machine member,
**characterised in that**
said at least one electric motors (130, 150, 160) being connected alternatively to the battery (77) or to the i.c. engine /generator (1, 6), the connection to the battery being only via electronic operating and control means (88) responsive to the difference between the power request of said at least one electric motor (130, 150, 160) and the instant power supply of the i.c. engine /generator (1, 6), said electronic operating and control means (88) being provided for further excluding the i.c. engine under command of the operator.

2. A unit as claimed in claim 1, **characterised in that** said generator is dimensioned to provide current amount equal to the maximum absorbed by the machine operating with all the main and secondary user items activated, plus an overcurrent for charging said battery.

3. A unit as claimed in claim 1, **characterised in that** the i.c. engine is a constant r.p.m. engine.

4. A unit as claimed in claim 1, **characterised in that** the i.c. engine is a variable r.p.m. engine.

5. A unit as claimed in claim 4, **characterised in that** the engine rotation speed is automatically governed by the current absorption of the user items with which the machine is provided.

6. A self-propelled machine, such as a motor sweeper, **characterised by** being provided with a power unit in accordance with claims 1 to 5.

## Patentansprüche

1. Antriebseinheit für selbstfahrende Maschinen, welche einen Verbrennungsmotor (1), einen damit verbundenen Stromgenerator (6), eine mit dem Generator verbundene, wiederaufladbare Batterie (77) und wenigstens einen Elektromotor (130, 150, 160), aufweist, der mit dem Generator verbunden und dafür vorgesehen ist, wenigstens ein Maschinenelement zu betreiben,
**dadurch gekennzeichnet, dass**
der wenigstens eine Elektromotor (130,150,160) alternativ mit der Batterie (77) oder dem Verbrennungsmotor/Generator (1,6) verbunden ist, wobei die Verbindung mit der Batterie ausschließlich über eine elektronische Betriebs- und Steuereinrichtung (88) stattfindet, die auf den Unterschied zwischen dem Leistungsbedarf des wenigstens einen Elektromotors (130,150,160) und der momentanen Stromversorgung des Verbrennungsmotors/Generators (1,6) reagiert, wobei die elektronische Betriebs- und Steuereinrichtung (88) dafür vorgesehen ist, den Verbrennungsmotor abhängig von der Steuerung des Betreibers auszuschließen.

2. Einheit nach Anspruch 1,
**dadurch gekennzeichnet, dass**
der Generator so dimensioniert ist, dass er eine Stromstärke zur Verfügung stellt, die der maximalen Aufnahme der Maschine entspricht, wenn sie mit allen Haupt- und Sekundärbenutzungsgegenständen betrieben wird, plus einem Überstrom zum Aufladen der Batterie.

3. Einheit nach Anspruch 1,
**dadurch gekennzeichnet, dass**
der Verbrennungsmotor ein Motor mit konstanter Drehzahl ist.

4. Einheit nach Anspruch 1,
**dadurch gekennzeichnet, dass**
der Verbrennungsmotor ein Motor mit regelbarer Drehzahl ist.

5. Einheit nach Anspruch 4,
**dadurch gekennzeichnet, dass**
die Motordrehzahl durch den Stromverbrauch der Benutzungsgegenstände, mit denen die Maschine ausgestattet ist, automatisch geregelt wird.

6. Selbstfahrende Maschine, wie zum Beispiel Straßenkehrmaschine,
**dadurch gekennzeichnet, dass**
sie mit einer Antriebseinheit gemäß den Ansprüchen 1 bis 5 ausgestattet ist.

## Revendications

1. Unité motrice pour machines autopropulsées, comprenant un moteur à combustion interne (1), une génératrice (6) de courant qui lui est raccordée, une batterie d'accumulateurs (77) connectée à la génératrice, et au moins un moteur électrique (130, 150, 160) connecté à la génératrice et destiné à commander au moins un élément de machine,
**caractérisée en ce que**
le moteur électrique au moins (130, 150, 160) est connecté en alternance à la batterie (77) et au moteur à combustion interne/génératrice (1, 6), la connexion à la batterie s'effectuant uniquement par l'intermédiaire d'un dispositif électronique de manoeuvre et de commande (88) qui est commandé par la différence entre la puissance demandée par le moteur électrique au moins (130, 150, 160) et la puissance instantanée du moteur à combustion interne/génératrice (1, 6), le dispositif électronique de manoeuvre et de commande (88) étant en outre destiné à exclure le moteur à combustion interne sous la commande de l'opérateur.

2. Unité selon la revendication 1, **caractérisée en ce que** la génératrice a des dimensions telles qu'elle peut donner une intensité de courant égale à la quantité maximale absorbée par la machine lorsqu'elle fonctionne avec tous les articles principaux et secondaires d'utilisateur activés, augmentée d'une surintensité de charge de la batterie.

3. Unité selon la revendication 1, **caractérisée en ce que** le moteur à combustion interne est un moteur à vitesse constante de rotation.

4. Unité selon la revendication 1, **caractérisée en ce que** le moteur à combustion interne est un moteur à vitesse variable de rotation.

5. Unité selon la revendication 4, **caractérisée en ce que** la vitesse de rotation du moteur est automatiquement contrôlée par l'absorption de courant des articles d'utilisateur dont est munie la machine.

6. Machine autopropulsée, telle qu'une balayeuse à moteur, **caractérisée en ce qu'**elle comporte une unité d'alimentation selon les revendications 1 à 5.
